# EUROPEAN PATENT APPLICATION

(11) **EP 4 060 764 A1**
(43) Date of publication of application: **21.09.2022**
(21) Application number: 21163573.5
(22) Date of filing: 18.03.2021
(51) Int. Cl.: H01M 4/133, H01M 4/136, H01M 4/58, H01M 4/583, H01M 4/1397, H01M 4/1393, H01M 10/05, H01M 4/04

(54) **SULFURIZED CARBON CATHODES**

(71) Applicant: William Marsh Rice University, Houston, TX 77005 (US)
(72) Inventor: TOUR, James M., Bellaire, TX Texas 77401 (US); SALVATIERRA, Rodrigo Villegas, Houston, TX Texas 77056 (US); SILVA, Gladys Anahi Lopez, Houston, TX Texas 77056 (US); RAJI, Abdul-Ramahn O., Houston, TX Texas 77005 (US)
(74) Representative: HGF

(57) **Abstract**

Alkali metal-sulfur cells and batteries with cathode layers that store alkali metal charge carriers (e.g., lithium ions) in agglomerates of sulfurized carbon. The cathode layers lack costly and environmentally unfriendly nickel and cobalt. The cathode layers are composites that include agglomerates of sulfurized-carbon particles in a conductive binder and interconnected by sp²-bonded carbon materials, such as carbon nanotubes or nanoribbons, that extend within the agglomerates and between the sulfurized-carbon particles.

## Description

### TECHNICAL FIELD

The present invention relates to sulfurized carbon cathodes, and more particularly to alkali metal-sulfur cells and batteries with cathode layers that store alkali metal charge carriers (e.g., lithium ions) in agglomerates of sulfurized carbon.

### BACKGROUND

An electric battery includes one or more electric cells. Each cell includes a positive terminal (cathode) and a negative terminal (anode) physically separated by an ion conductor (electrolyte). When a cell is discharged to power an external circuit, the anode supplies negative charge carriers (electrons) to the cathode via the external circuit and positive charge carriers (cations) to the cathode via the internal electrolyte. During charging, an external power source drives electrons from the cathode to the anode via the power source and the resultant charge imbalance pulls cations from the cathode to the anode via the electrolyte.

Lithium-ion (Li-ion) batteries store charge in the anode as Li cations (aka Li ions). Li-ion batteries are rechargeable and ubiquitous in mobile communications devices and electric vehicles due to their high energy density, a lack of memory effect, and low self-discharge rate. Lithium-metal batteries store charge in the anode as lithium metal. Li-metal batteries have superior power density but are generally not rechargeable. Lithium ions are the positive charge carriers that travel to and are stored in the cathode during discharge in both Li-ion and Li-metal batteries.

Li-ion and Li-metal batteries offer excellent performance. There nevertheless exist demands for improvements along every metric of battery price and performance. Moreover, the cathodes in most popular lithium-based batteries include cobalt and nickel, both of which are mined at considerable financial and environmental cost. Also important, these materials are not distributed evenly across the globe, leading to fears of scarcity, supply disruptions, and concomitant political and economic instabilities. Cobalt is particularly troublesome because supply is located predominantly in the conflict-torn Democratic Republic of Congo and supply is dominated by a small number of companies. There is therefore a strong demand for battery components that reduce or eliminate the needs for cobalt and nickel.

### SUMMARY

According to a first aspect, the present invention provides an energy-storage device comprising: (a) an anode; and (b) a cathode, the cathode including a cathode layer with distinct agglomerates, wherein the distinct agglomerates comprise: (i) sulfurized-carbon particles, wherein the sulfurized-carbon particles comprise a mixture of carbon and sulfur atoms; and (ii) carbon nanomaterial in contact with the sulfurized-carbon particles; wherein at least 50% of the carbon atoms with an adjacent sulfur atom in the agglomerates are each covalently bonded to the adjacent sulfur atom via a carbon-sulfur bond.

An agglomerate as described herein includes an assembly of sulfurized-carbon particles and carbon nanomaterial in contact with the sulfurized-carbon particles.

A sulfurized-carbon particle as described herein comprises a mixture of carbon and sulfur atoms in contact with one another.

Implementations of the invention can include one or more of the following features:

The carbon nanomaterials can be covalently bonded to the sulfurized-carbon particles. For example, the carbon nanomaterial may be covalently bonded to the sulfur of a sulfurized-carbon particle.

In the cathode layer comprising sulfur, including the sulfur atoms, the sulfur may include less than 10 wt% elemental sulfur.

The device can further include a binder in the cathode layer within which the agglomerates are distributed.

The particles can include less than 10% oxygen in mass ratio.

The agglomerates of sulfurized-carbon particles can be ellipsoid.

The agglomerates of sulfurized-carbon particles can have average principal axes of between 500 nanometers and 5,000 nanometers.

The sulfurized-carbon particles can be ellipsoid.

The sulfurized-carbon particles can have average principal axes of less than one micron, for example less than 500 nanometers.

The average of the principal axes of the sulfurized-carbon particles can be between 50 nanometers and 250 nanometers.

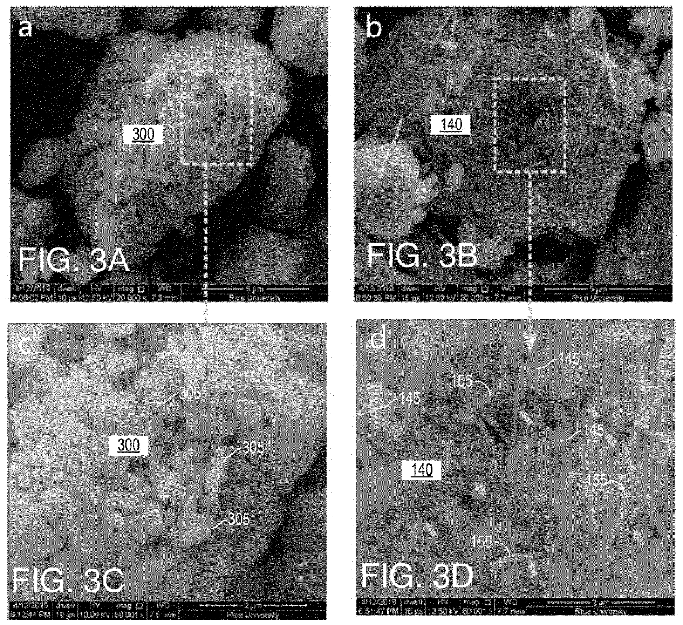

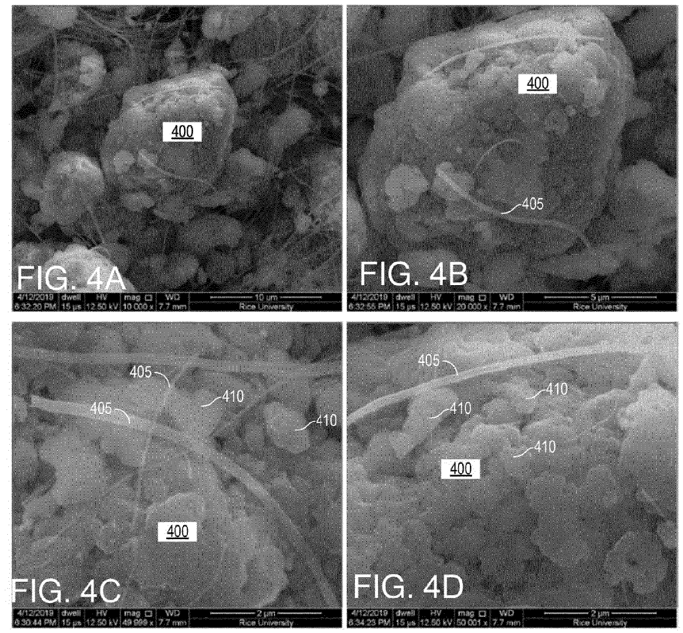

The dimensions of the principle axes of the sulfurized-carbon particles and the agglomerates of sulfurized-carbon particles are measured using SEM, as described herein (see FIG 3 and 4).

The values for the average principle axes described above therefore allow for the population of sulfurized-carbon particles or agglomerates of sulfurized-carbon particles to include a distribution of sizes. Therefore, a proportion of the sulfurized-carbon particles may have a larger principle axis than the average principle axis of the agglomerates of sulfurized-carbon particles.

The carbon nanomaterial can extend within the agglomerates and between the sulfurized-carbon particles. The carbon nanomaterial can extend within and between the sulfurized-carbon particles.

The carbon nanomaterial can include at least one of nanotubes and nanoribbons.

The cathode further can further comprises an alkali metal, *i.e.,* the sulfurized-carbon particles can store an alkali metal.

The sulfurized-carbon particles can consist primarily of sulfur, *i.e.,* the sulfurized-carbon particles can comprise greater than 50% sulfur by weight.

The sulfurized-carbon particles can consist essentially of carbon and sulfur, for example may comprise only *de minimis* levels of components other than carbon and sulfur.

The carbon can include the carbon nanomaterial and carbon atoms bonded to the adjacent sulfur atoms.

The agglomerates of sulfurized-carbon particles can have a mass ratio of the carbon covalently bonded to the sulfur and the carbon nanomaterial greater than one.

The mass ratio can be greater than ten.

Essentially all the sulfur atoms in the agglomerates of sulfurized-carbon particles can be bonded to the carbon atoms or the carbon nanomaterial before cycling of the energy storage device.

According to a second aspect, the present invention provides a method of making an electrode for an energy-storage device, the method comprising: (a) providing sulfurized-carbon particles, wherein the sulfurized-carbon particles comprise a mixture of carbon and sulfur atoms; (b) combining the sulfurized-carbon particles with carbon nanomaterial; and (c) forming agglomerates of the sulfurized-carbon particles and carbon nanomaterial; wherein, at least 50% of the carbon atoms with an adjacent sulfur atom in the agglomerates are each bonded to the adjacent sulfur atom via carbon-sulfur bonds.

Implementations of the invention can include one or more of the following features:

The method step (c) can further include heating the sulfurized-carbon particles with carbon nanomaterial to produce the agglomerates.

The method can further include combining the agglomerates of step (c) with a solvent to produce a slurry.

The method can further include spreading the slurry on a current collector and drying the slurry on the current collector.

Producing the slurry can include combining the agglomerates of step (c) with a binder and a conductive carbon additive.

The method can further include lithiating the agglomerates of step (c) before incorporating the electrode into the energy-storage device.

The method step (a) can further include forming the sulfurized-carbon particles. The forming can include combining sulfur with a polymer and pyrolyzing the polymer with the sulfur. Less than 10 wt% of the sulfur atoms in the sulfurized-carbon particles formed in this step can be elemental sulfur.

The combining sulfur with the polymer can include milling the sulfur with the polymer.

The method can further include conducting steps (a) to (c) simultaneously, wherein the sulfurized-carbon particles and agglomerates are formed by pyrolyzing a mixture of a polymer, sulfur, and the carbon nanomaterial.

### BRIEF DESCRIPTION OF THE DRAWINGS

The subject matter disclosed is illustrated by way of example, and not by way of limitation, in the figures of the accompanying drawings and in which like reference numerals refer to similar elements and in which:
**FIG. 1** depicts an energy-storage device in accordance with an embodiment that eschews cobalt and nickel in favor of inexpensive and readily available sulfur and carbon.
**FIG. 2** depicts a method of making cathode, an electrode for an energy-storage device in accordance with one embodiment.
**FIGS. 3A-3D** are SEM images that compare the morphology of agglomerates with MWCNT powder during heat treatment (**FIGS. 3B** and **3D**) with agglomerates prepared similarly but without MWCNT powder (**FIGS. 3A** and **3C**). For **FIGS. 3A-3B****,** the scale is 1.7 microns/cm; and for **FIGS. 3C-3D****,** the scale is 0.7 microns/cm.
**FIGS. 4A-4D** are SEM images that illustrate the morphology of agglomerates produced in a method such as shown in **FIG. 2** but in which MWCNT powder is added to a sulfurized-carbon mixture prepared without MWCNT through mixing, milling, and heating processes. For **FIGS. 4A-4B****,** the scales are 8.6 microns/cm and 4.3 microns/cm, respectively. For **FIGS. 4C-4D****,** the scale is 1.7 microns/cm.
**FIG. 5** depicts a graph of voltage versus time, in hours, for a pouch cell battery having a sulfurized-carbon cathode in accordance with one embodiment.
**FIG. 6** depicts a self-discharge test of the pouch-cell battery discussed previously in connection with **FIG 5****.**
**FIG. 7A** is a graph showing mass loss versus temperature of a sulfurized-carbon cathode in accordance with one embodiment.
**FIG. 7B** is a graph showing temperature of decomposition of a sulfurized-carbon cathode in accordance with one embodiment and a commercial Li-ion cathode.
**FIG. 7C** is a graph showing a comparison of metal content of a sulfurized-carbon cathode in accordance with one embodiment and several commercial Li-ion cathodes.
**FIG. 7D** is a graph showing a comparison of energy density of a sulfurized-carbon cathode in accordance with one embodiment and several commercial Li-ion cathodes.

### DETAILED DESCRIPTION

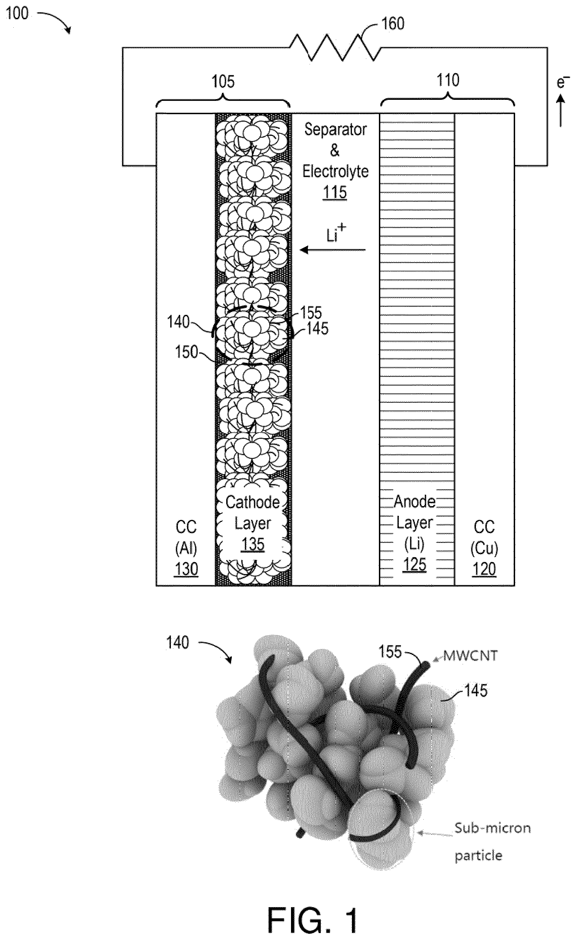

**FIG. 1** depicts an energy-storage device **100,** a lithium or lithium-ion cell, in accordance with an embodiment that eschews cobalt and nickel in favor of inexpensive and readily available sulfur and carbon. Device **100** includes a cathode **105** separated from an anode **110** via an electrolyte **115** with a separator (not shown) of, *e.g.,* a porous polymer. Anode **110** includes a current collector **120** of, *e.g.,* copper physically and electrically connected to an anode layer **125** of lithium metal or a combination of lithium metal or lithium ions and some form of porous carbon. Cathode **105** includes a current collector **130** of, *e.g.,* aluminum physically and electrically connected to a cathode layer **135.** Cathode layer **135** is a composite that includes distinct agglomerates **140** of sulfurized-carbon particles **145** distributed in a binder **150** and interconnected by sp²-bonded carbon nanomaterials **155,** such as carbon nanotubes or nanoribbons. Binder **150** physically and electrically connects agglomerates **140.** Sulfurized-carbon particles **145** have high concentrations of sulfur, greater than 65 wt% in some embodiments. A majority (more than 50%) of the carbon atoms with adjacent sulfur atoms, including those carbon atoms of carbon nanomaterials **155,** are bonded to the adjacent sulfur atoms via covalent carbon-sulfur bonds that suppress the formation of undesirable soluble polysulfides.

Lithium in anode layer **125** is oxidized (electron loss) during cell discharge to power a load **160** external to the cell. Electrons pass from anode layer **125** to cathode layer **135** via current collectors **120** and **130** and load **160,** and lithium cations (Li⁺) from anode layer **125** pass to cathode layer **135** via electrolyte **115** where they are reduced (electron gain) within agglomerates **140** as lithium polysulfide salts. Charging reverses this process by stripping lithium ions and electrons from agglomerates **140** and returning them to anode layer **125.**

Conventional lithium-sulfur (Li-S) cells lose sulfur from the active cathode layer when elemental sulfur reacts with the lithium ions in the electrolyte to form soluble lithium polysulfides. In this deleterious process, sometimes referred to as the shuttle effect, lithiated polysulfides shuttle sulfur from the active cathode material through the electrolyte to plate onto the anode layer during charging. The shuttle effect both reduces storage capacity and increases internal resistance.

Based on information and belief, and without being limited to theory, agglomerates **140** initially lack or substantially lack elemental sulfur (less than 2 wt%). When device **100** is first discharged, the sulfurized carbon reduces lithium ions to form lithium sulfides. Components of electrolyte **115** also reduce within and between sulfurized-carbon particles **145** to form a matrix of solid-electrolyte interface (SEI) that extends through agglomerates **140.** The SEI matrix traps the polysulfides but is an ion conductor. During charging, the SEI matrix and associated carbon retains the sulfur and allows lithium ions to escape back through electrolyte **115** to cathode layer **135.** The SEI matrix continues to retain the sulfur over subsequent charge/discharge cycling.

**FIG. 1****,** at bottom, graphically depicts an exemplary sulfurized-carbon agglomerate **140** of cathode layer **135.** Binder **150** of, *e.g.,* carbon black is omitted. The average agglomerate **140** approximates an ellipsoid (*e.g.*, approximately spheroid), in this example, with average principal axes of between 500 and 5,000 nanometers. In the case of a sphere, an ellipsoid in which the three principal axes are equal, the average agglomerate **140** has a diameter of between one and five microns. Agglomerates **140** can be of different dimensions and shapes in other embodiments.

Carbon nanomaterials **155** are represented by circuitous strands of multi-wall carbon nanotubes that extend within and between sulfurized-carbon particles **145.** Particles **145** are, like agglomerates **140,** ellipsoid in this example but with sub-micron average principal axes of, *e.g.,* 50 to 250 nanometers. Other carbon nanomaterials can be used with or instead of carbon nanotubes, such as nanoribbons or nanoplatelets. In general, a carbon nanomaterial contains particles, in an unbonded state or as an aggregate or as an agglomerate, with at least half the particles having a minimum dimension less than one hundred nanometers. Carbon nanomaterials **155** reduce thermal and electrical impedance within and between agglomerates **140** and particles **145,** improve material strength to accommodate expansion and contraction, and may improve electrolyte whetting of the sulfurized-carbon material for improved ion conduction.

Particles **145** consist essentially of sulfur, carbon, and nitrogen, predominantly sulfur and carbon. Trace amounts of other elements might also be included, such as from atmospheric or material contaminants. The sulfur, prior to cathode lithiation, is believed to be composed mainly of small sulfur chains (S₂-S₃) chemically bonded to carbon. Agglomerates **140** and the encompassing carbon-collectively the active cathode material-consist primarily of sulfur. The active cathode material lacks oxygen, which advantageously reduces the risk of combustion. In some embodiments the sulfur in the active cathode material is essentially all bonded to carbon either directly or via one or more other sulfur atoms prior to lithiation.

Based on information and belief, and without being limited to theory, lithium breaks the carbon-sulfur bonds to form lithium sulfide compounds (LiSₓ) during cell discharge. Electrolyte components of solvent and salt reduce within and between sulfurized-carbon particles **145** to form the SEI Electrolytes with high lithium concentrations in organic solvents work well with lithium anodes for cycling stability. Electrolyte **115** has a concentration of at least 2 mol/L in some embodiments.

U.S. Patent Appl. Publ. No. 2019/0181425, filed February, 26, 2019, published June 13, 2019, and entitled "Anodes, Cathodes, and Separators for Batteries and Methods to Make and Use the Same," (the *"Tour '425 Patent Application*") details separators, electrolytes, and anodes that can be combined with cathode **105** to form embodiments of storage device **100** and is incorporated herein by reference to the extent that it provides exemplary, procedural, or other details supplementary to those set forth herein. This writing takes precedence over the incorporated materials, including the *Tour '425 Patent Application,* for purposes of claim construction.

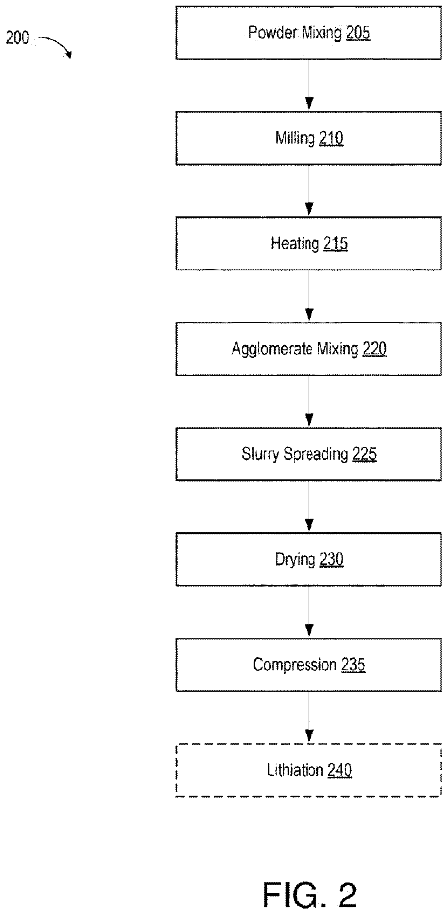

**FIG. 2** depicts a method **200** of making cathode **105,** an electrode for an energy-storage device in accordance with one embodiment. First, at step **205,** powders of sulfur, polyacrylonitrile (PAN), and multi-wall carbon nanotubes (MWCNTs) are mixed in a mass ratio of 55:11:1. Next (at step **210**), the mixture from step **205** is ground and blended to form granules of sulfur/PAN particles interlaced with carbon nanotubes. Grinding and blending is performed using a ball mill in one embodiment. The ball milling process can convert the sulfur/PAN and carbon nanotube powder mixture into packed granules. The resultant granules are then pyrolyzed (at step **215**) in a furnace, heated in an inert atmosphere of, *e.g.,* argon or nitrogen, for, *e.g.,* six hours at 450°C. This heat treatment carbonizes the PAN by driving off constituent hydrogen and nitrogen and incorporating sulfur, though levels of nitrogen can remain after the process. Steps **205** through **215** can be carried out absent some or all of the carbon nanomaterial (*e.g.*, carbon nanotubes) to make sulfurized-carbon granules. Carbon nanomaterials or additional carbon nanomaterials of the same or a different type (*e.g.*, ribbons versus tubes of the same or different lengths) can then be incorporated with the sulfurized-carbon granules via mixing and heating.

In an example in which the mass ratio of 55:11:1 for S:PAN:MWCNT was used in step **205** (as in 55 g of S, 11 g of PAN, and 1 g of MWCNT), the material yield after heat treatment of step **215** was 26 to 28 percent by mass, of which about 5.7 wt% was MWCNT. The resultant sulfurized carbon material (SC) can be further combined with a binder, such as PVDF, and a carbon additive to produce a cathode composition. The content of SC in this cathode composition can vary from, *e.g.,* 80 to 95% in weight.

**FIGS. 3A-3D** compare the morphology of agglomerates **140** with MWCNT powder during heat treatment (**FIGS. 3B** and **3D**) with agglomerates **300** prepared similarly but without MWCNT powder (**FIGS. 3A** and **3C**). In general, the process of **FIG. 2** yields spherical agglomerates with diameters between one and five microns. SEM analysis at higher magnifications (**FIGS. 3C-3D**) show that agglomerates **300** and **140** respectively include smaller particles **305** and **145** that are from about 200 to 500 nanometers in diameter. MWCNT powder added in step **205** yields MWCNT carbon nanomaterials **155** that are interlaced between particles **145** as noted above in connection with **FIG. 1****.** MWCNTs can also be found outside agglomerates **140,** bridging the spaces between them. Relatively short MWCNTs decorate the interior and walls of agglomerates **140,** possibly resulting from shear forces used during mixing step **205.**

**FIGS. 4A-4D** illustrate the morphology of agglomerates **400** produced in a method like that of **FIG. 2** but in which MWCNT powder is added to a sulfurized-carbon mixture prepared without MWCNT through mixing, milling, and heating processes of steps **205, 210,** and **215.** Instead, 5.7 wt% of MWCNT powder was admixed after the heating of step **215.** Agglomerates **400** of **FIG. 4** are materially different from agglomerates **140** of **FIGS. 3B** and **3D****.**

The amount of MWNT was calculated to be the same as the SC produced in the presence of MWCNT (5.7 wt%). The mixing of the MWCNT and SC was performed in an agate mortar in air for five minutes. Although several MWCNTs **405** were found between sulfurized-carbon particles **410,** none was observed within the body frame of agglomerates **400.** Milling produces hard, dense agglomerates that advantageously include a large percentage of sulfur. These milled agglomerates are insulating, however, and resist electrolyte penetration. The presence of the MWCNTs **405** inside agglomerates **400** is thought to increase the electrical and thermal conductivity of the SC particles and produce an open structure that improves electrolyte access to the agglomerate interiors. This understanding is based in part on experiments showing that cathode layers produced with sulfurized carbon and an acetylene-black binder for electrode conductivity exhibit inferior electrical properties in comparison to similar layers with MWCNTs that extend within agglomerates and between sulfurized-carbon particles.

Returning to **FIG. 2****,** agglomerates **140** from heating at step **215** are mixed with a powdered carbon, such as acetylene black, a binder and an organic solvent or water to form a slurry (at step **220**). The binder and carbon additive can compose from 5 to 20% in weight of the solid mass. The slurry is then spread over a conductor (e.g. an aluminum foil) that will serve as current collector (at step **225**). The slurry-coated foil is then dried (at step **230**) by, *e.g.,* heating in dry air. The dried cathode layer is compressed, *e.g.,* by passing the foil between rollers. In an embodiment in which the dried slurry and underlying foil are together about 100 microns, for example, the compression reduces cathode-layer thickness to between sixty and seventy microns, depending on the mass loading, with little impact on the foil. Mass loading of sulfurized-carbon cathodes can be e.g. three to seven milligrams per square centimeter, with a final sulfur content of, *e.g.,* 47 to 65 wt%.

The cathode with the dried, compressed cathode layer from step **235** can be incorporated into a lithium-metal cell. Lithium metal oxidized at the anode releases lithium ions through the electrolyte to the cathode during discharge. An optional lithiation process (step **240**) may be used when the cathode from step **235** is to be incorporated into a lithium-ion cell. Lithium ions sourced from, *e.g*., lithium foil can be electrochemically intercalated into a carbon anode layer prior to cell assembly, for example.

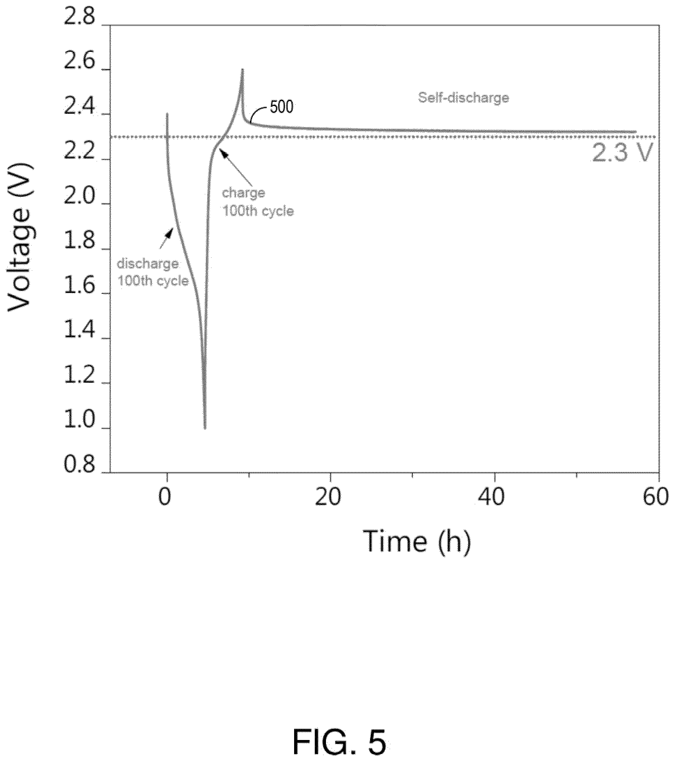

**FIG. 5** depicts a graph with plot **500** of voltage versus time, in hours, for a pouch cell battery having a sulfurized-carbon cathode in accordance with one embodiment. Though not shown, the open-circuit potential (OCP) remained at about ∼2.30 ± 0.01 V for over five months (measured weekly using a regular multimeter). This cell, charged to 100% at 0.2C (108.21mAh), was discharged after five months at 0.2C (107.63 mAh) to recover 99.46% of the charged capacity. This very low self-discharge even at months is indicative of a very stable cathode; ∼ 0.1% capacity loss per month is an order of magnitude lower than the 1-2% self-discharge common in lithium-ion batteries.

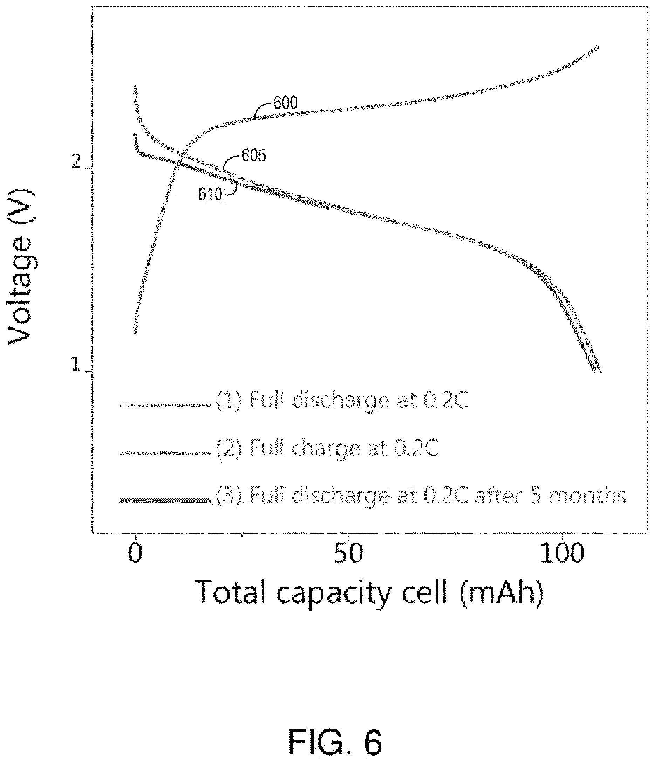

**FIG. 6** depicts a self-discharge test of the pouch-cell battery discussed previously in connection with **FIG. 5****.** A first plot **600** of voltage versus cell capacity (mAh) shows the relationship between voltage and capacity when the battery was charged at 0.2C. Plots **605** and **610** show the relationship between voltage and capacity for the same cell discharged at 0.2C, with plot **605** immediately following charging and with plot **610** after a delay of five months. The similarities of plots **605** and **610** evince excellent stability.

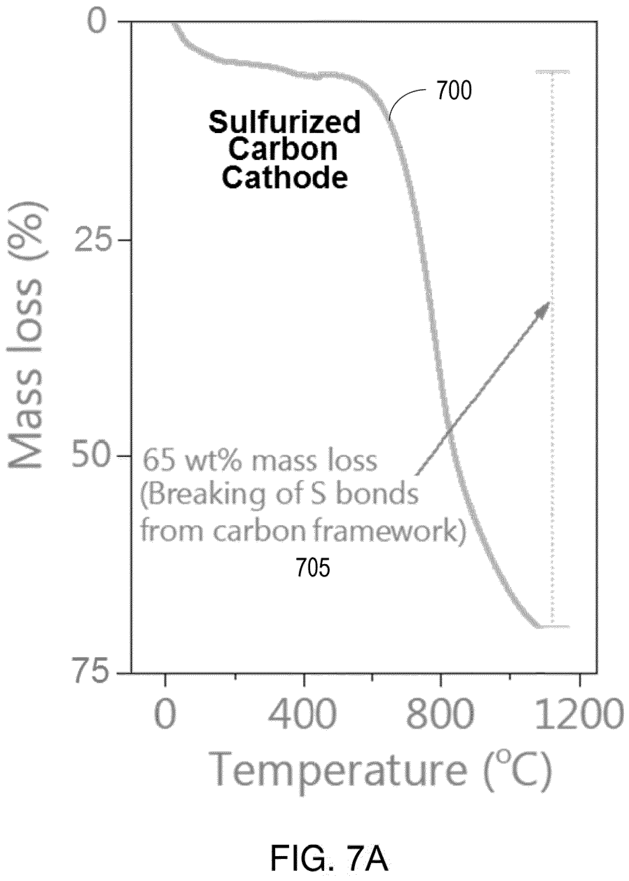

Furthermore, the sulfurized-carbon cathode made as described above, was tested and characterized. The cathode powder material was evaluated by different spectroscopy, microscopy and thermogravimetric techniques. The cathode was also tested in real cells to evaluate its ability to hold and release charge (gravimetric capacity and cycling stability). The results of such testing and characterization are shown in **FIGS. 7A-7D****.**

Such testing and characterization shows:

The active material (mainly sulfur) content in the cathode material in this embodiment was 65 wt%. As shown in **FIG. 7A****,** plot **700** shows the decrease in mass percent of the sulfurized carbon cathode as temperature increased. Plot **700** intersected line **705** (showing the temperature of breaking of S bonds from the carbon framework) at around 65 wt%. Other prepared variants of the sulfurized carbon cathode materials prepared were found to contain greater than 70 wt% sulfur.

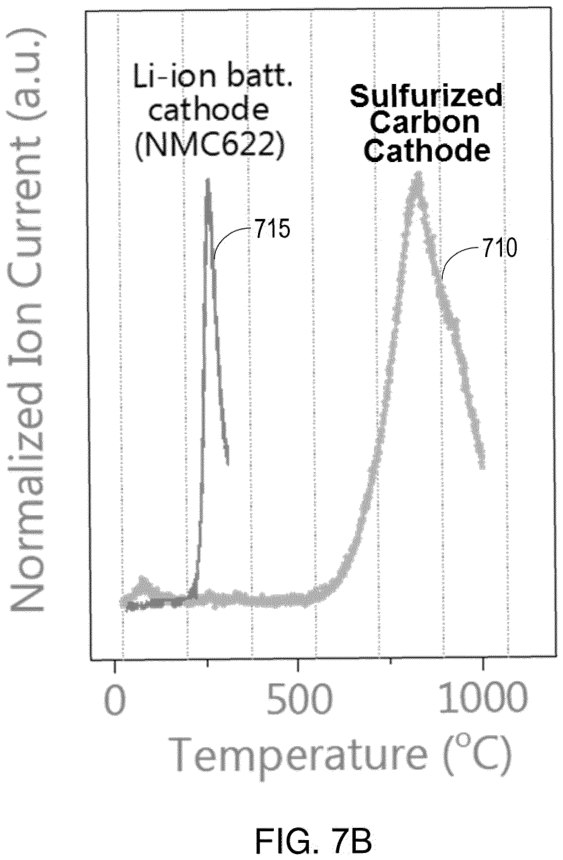

The onset temperature of cathode decomposition of this embodiment was greater than 600°C. **Plot 710** in **FIG. 7B** shows the normalized ion current of the sulfurized-carbon cathode, which shows the decomposition at a temperature well above 600°C (median temperature of almost 850°C). This is in comparison with the normalized ion current of a commercial Li-ion cathode NMC622 (LiNi_{0.6}Mn_{0.2}Co_{0.2}O₂), which decomposition is shown in plot **715** and is consistent with reports in the literature. Thus, a regular sulfur cathode completely loses its sulfur by evaporation at a median temperature of 220-250°C (depending on heating rate) based on thermogravimetric analysis (TGA). This relatively low decomposition temperature indicates that the sulfur is elemental sulfur. The sulfur in the sulfurized carbon cathodes detailed herein is lost at a median temperature of 850 °C. This relatively high decomposition temperature indicates that the majority of the sulfur atoms in the sulfurized-carbon cathode are bonded to an adjacent carbon atom via a relatively strong, covalent, carbon-sulfur bond. In some embodiments, essentially all of the sulfur in the agglomerates of sulfurized-carbon particles are bonded to carbon, though some may be unbonded during cycling (*i.e.,* moving charge carriers into and out of the cathode). Before cycling, the amount of elemental sulfur is less than 10 wt% of the total sulfur, less than 2 wt% in some samples, and the mass ratio of the carbon covalently bonded to the sulfur to the carbon nanomaterial is greater than one, and greater than ten in some embodiments.

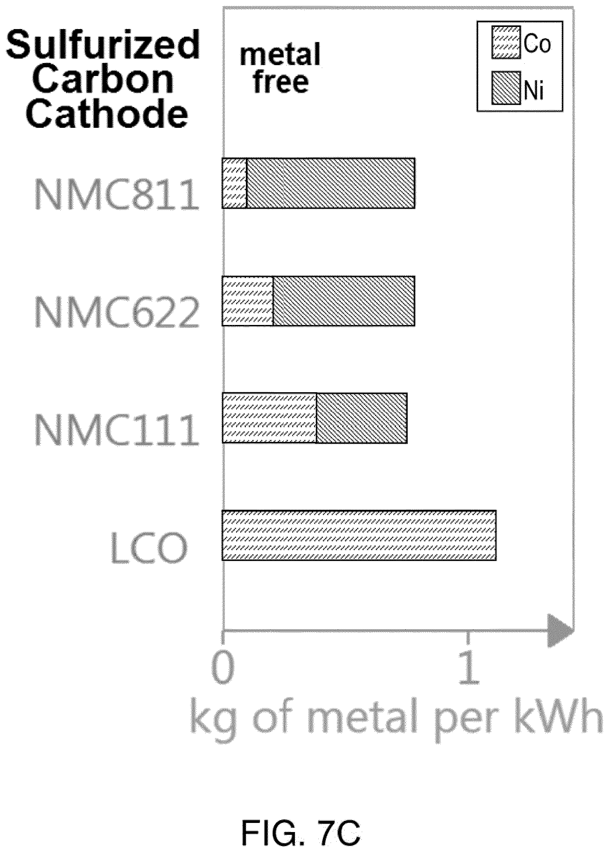

The morphology and metal content of the cathode particles in the sulfurized carbon as compared to commercial Li-ion cathodes NMC811 (LiNi_{0.8}Mn_{0.1}Co_{0.1}O₂), NM622 (LiNi_{0.6}Mn_{0.2}Co_{0.2}O₂), NMC111 (LiNi_{1/3}Mn_{1/3}CO_{1/3}O₂), and LCO (LiCoO₂) is shown in **FIG. 7C** (in kg of metal per kWh).

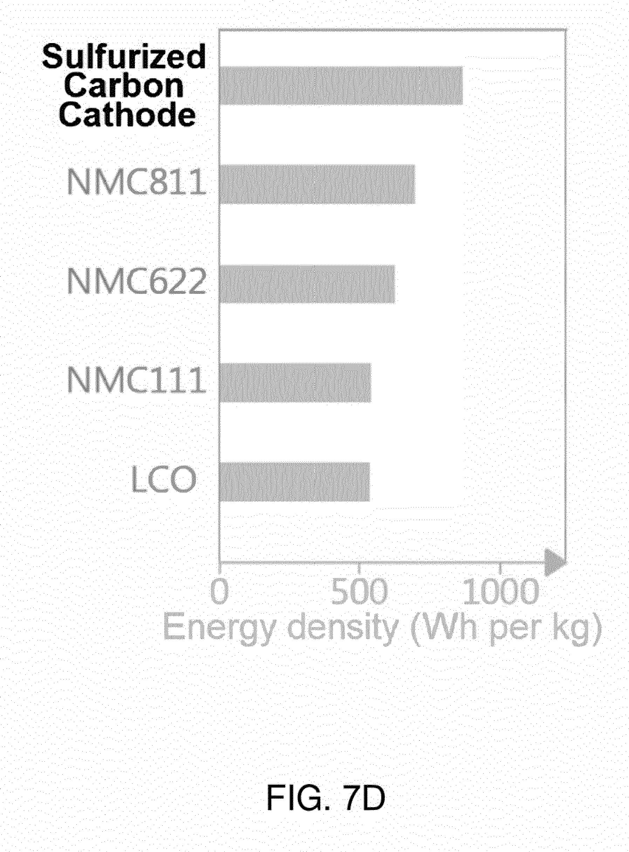

The improved actual cathode energy density based on measured capacity and voltage for he sulfurized carbon as compared to commercial Li-ion cathodes NMC811, NM622, NMC111, and LCO is shown in **FIG. 7D** (in Wh per kg).

**FIGS. 7A-7D** show that the sulfur in the sulfurized carbon cathode is in a distinct state and the weight loss (shown in **FIG. 7A**) is due to chemical decomposition (breaking of carbon-sulfur bond), not mere evaporation (breaking of sulfur-sulfur bond). Thus, the bonding of the sulfur to the carbon framework and the significant energetic requirement to break the bond in the sulfurized carbon cathode explain the fundamental nature, strength, and stability of the bond. It is believed that it is the super-strong carbon-sulfur bonding of the sulfurized carbon cathode that prevents formation of lithium polysulfides upon lithiation (which is unlike regular sulfur cathode in a lithium battery), thus enabling cycling stability.

Testing has shown and confirmed the carbon-sulfur covalent bond at the atomic/molecular level. This supports that the sulfurized carbon cathode, in pristine or lithiated state, will prevent formation of hydrogen sulfide upon exposure to moisture or water. Though hydrogen sulfide formation will be supported by an increase in entropy due to conversion of a solid phase to gaseous phase of sulfur, the energetic barrier due to the strength of the carbon-sulfur bond will be so great that the enthalpy contribution to the Gibb's free energy will greatly overcome entropy in the driving force.

The foregoing discussion focuses on batteries that employ lithium ions as charge carriers. Other alkali metals (*e.g.*, sodium, potassium, and magnesium) can also be used.

Cathode layers can include, *e.g.*, selenium with the sulfurized carbon. Moreover, selenium and mixtures of sulfur and selenium can be used, either as powders containing sulfur and selenium in a determined ratio, or as compounds containing both elements, such as SeS₂ (selenium disulfide).

The polymer utilized can be varied with such as by using different molecular weights polymers, co-polymers of PAN, or reticulated polymers.

The carbon nanomaterial can be varied, such as graphene nanoribbons and single-walled carbon nanotubes.

The powder ratios can be varied. For instance, S:PAN:C ratio can be used in amounts other than 55:11:1, such as 55:11:5, 55:11:0.5 and 55:11:0.25.

Additional variations of these embodiments will be obvious to those of ordinary skill in the art. Therefore, the spirit and scope of the appended claims should not be limited to the foregoing description. Only those claims specifically reciting "means for" or "step for" should be construed in the manner required under the sixth paragraph of 35 U.S.C. §112.

While embodiments of the invention have been shown and described, modifications thereof can be made by one skilled in the art without departing from the spirit and teachings of the invention. The embodiments described and the examples provided herein are exemplary only, and are not intended to be limiting. Many variations and modifications of the invention disclosed herein are possible and are within the scope of the invention. The scope of protection is not limited by the description set out above, but is only limited by the claims which follow, that scope including all equivalents of the subject matter of the claims.

Amounts and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a numerical range of approximately 1 to approximately 4.5 should be interpreted to include not only the explicitly recited limits of 1 to approximately 4.5, but also to include individual numerals such as 2, 3, 4, and sub-ranges such as 1 to 3, 2 to 4, *etc.*

Representative methods, devices, and materials are described herein. Similar or equivalent methods, devices, and materials will be obvious to those of skill in the art in view of the forgoing teachings and can be used in the practice or testing of the presently disclosed subject matter.

Following long-standing patent law convention, the terms "a" and "an" mean "one or more" when used in this application, including the claims.

The invention also provides for an energy storage device or method of making an electrode for an energy-storage device according to any of the following numbered clauses, which alternatively define the invention:
1. An energy-storage device comprising:
   (a) an anode; and
   (b) a cathode, the cathode including:
      (i) distinct agglomerates of sulfurized-carbon particles, wherein
         (A) the sulfurized-carbon particles comprise carbon atoms with adjacent sulfur atoms, and
         (B) a majority of the carbon atoms with the adjacent sulfur atoms are bonded to the adjacent sulfur atoms via carbon-sulfur bonds; and
      (ii) carbon nanomaterial extending within the agglomerates of sulfurized-carbon particles and between the sulfurized-carbon particles.
2. The device of Clause 1, wherein the carbon nanomaterials are covalently bonded to the sulfurized-carbon particles.
3. The device of Clause 1, wherein at least 90% of the carbon atoms with the adjacent sulfur atoms are bonded to the adjacent sulfur atoms via carbon-sulfur bonds.
4. The device of Clause 1 further comprising a binder within which the agglomerates are distributed.
5. The device of Clause 1, wherein the particles comprise less than 10% oxygen in mass ratio.
6. The device of Clause 1, wherein the agglomerates of sulfurized-carbon particles are ellipsoid.
7. The device of Clause 6, wherein the agglomerates of sulfurized-carbon particles have average principal axes of between 500 nanometers and 5,000 nanometers.
8. The device of Clause 7, wherein the sulfurized-carbon particles are ellipsoid.
9. The device of Clause 8, wherein the sulfurized-carbon particles have average principal axes of less than one micron.
10. The device of Clause 9, wherein the average of the principal axes of the sulfurized-carbon particles is between 50 nanometers and 250 nanometers.
11. The device of Clause 1, wherein the carbon nanomaterial extends within and between the sulfurized-carbon particles.
12. The device of Clause 1, wherein the carbon nanomaterial comprises at least one of nanotubes and nanoribbons.
13. The device of Clause 1, wherein the sulfurized-carbon particles store an alkali metal.
14. The device of Clause 13, wherein the sulfurized-carbon particles consist primarily of sulfur, including the sulfur atoms.
15. The device of Clause 14, wherein the sulfurized-carbon particles consist essentially of carbon and the sulfur.
16. The device of Clause 15, wherein the carbon comprises the carbon nanomaterial and the carbon atoms bonded to the adjacent sulfur atoms.
17. The device of Clause 16, wherein the agglomerates of sulfurized-carbon particles have a mass ratio of the carbon covalently bonded to the sulfur to the carbon nanomaterial greater than one.
18. The device of Clause 17, wherein the mass ratio is greater than ten.
19. The device of Clause 1, wherein essentially all the sulfur atoms in the agglomerates of sulfurized-carbon particles are bonded to the carbon atoms or the carbon nanomaterial before cycling of the energy-storage device.
20. A method of making an electrode for an energy-storage device, the method comprising combining sulfurized-carbon particles with carbon nanomaterial to form agglomerates of sulfurized-carbon particles, wherein:
   (a) the agglomerates of sulfurized-carbon particles comprise carbon atoms with adjacent sulfur atoms,
   (b) a majority of the carbon atoms with the adjacent sulfur atoms are bonded to the adjacent sulfur atoms via carbon-sulfur bonds, and
   (c) the carbon nanomaterial extends within the agglomerates of sulfurized-carbon particles and between the sulfurized-carbon particles.
21. The method of Clause 20, wherein the method further comprises heating the sulfurized-carbon particles with the carbon nanomaterial to produce the agglomerates.
22. The method of Clause 21 further comprising combining the agglomerates of sulfurized-carbon particles with a solvent to produce a slurry.
23. The method of Clause 22 further comprising spreading the slurry on a current collector and drying the slurry on the current collector.
24. The method of Clause 22, wherein producing the slurry comprises combining the agglomerates of sulfurized-carbon particles with a binder and a conductive carbon additive.
25. The method of Clause 20 further comprising lithiating the agglomerates of sulfurized-carbon particles before incorporating the electrode into the energy-storage device.
26. The method of Clause 20 further comprising forming the sulfurized-carbon particles, wherein the forming includes combining sulfur with a polymer and pyrolyzing the polymer with the sulfur.
27. The method of Clause 26, wherein the combining sulfur with the polymer comprises milling the sulfur with the polymer.
28. The method of Clause 20 further comprising forming the sulfurized-carbon particles, wherein the forming includes pyrolyzing a mixture of a polymer, sulfur, and the carbon nanomaterial.

## Claims

1. An energy-storage device comprising:
(a) an anode; and
(b) a cathode, the cathode including a cathode layer with distinct agglomerates,
wherein the distinct agglomerates comprise:
(i) sulfurized-carbon particles, wherein
the sulfurized-carbon particles comprise a mixture of carbon and sulfur atoms; and
(ii) carbon nanomaterial in contact with the sulfurized-carbon particles;
wherein at least 50% of the carbon atoms with an adjacent sulfur atom in the agglomerates are each covalently bonded to the adjacent sulfur atom via a carbon-sulfur bond.

2. The device of Claim 1, the cathode layer comprising sulfur, including the sulfur atoms, wherein the sulfur includes less than 10 wt% elemental sulfur.

3. The device of Claim 1 or Claim 2, wherein the carbon nanomaterial is covalently bonded to a sulfurized-carbon particle; optionally wherein the carbon nanomaterial is covalently bonded to the sulfur of a sulfurized-carbon particle.

4. The device of any of Claims 1 to 3, wherein the cathode layer further comprises a binder within which the agglomerates are distributed.

5. The device of any preceding Claim, wherein the particles comprise less than 10% oxygen in mass ratio.

6. The device of any preceding Claim, wherein the agglomerates of sulfurized-carbon particles are ellipsoid; optionally wherein the agglomerates of sulfurized-carbon particles have average principal axes of between 500 nanometers and 5,000 nanometers.

7. The device of any preceding Claim, wherein the sulfurized-carbon particles are ellipsoid; optionally wherein the sulfurized-carbon particles have average principal axes of less than 500 nanometers; further optionally between 50 nanometers and 250 nanometers.

8. The device of any preceding Claim, wherein the carbon nanomaterial extends within the agglomerates and between the sulfurized-carbon particles; optionally wherein the carbon nanomaterial extends within and between the sulfurized-carbon particles.

9. The device of any preceding Claim, wherein the carbon nanomaterial comprises at least one of nanotubes and nanoribbons.

10. The device of any preceding Claim, wherein the cathode further comprises an alkali metal.

11. The device of any preceding Claim, wherein the sulfurized-carbon particles comprise greater than 50% sulfur by weight;
optionally wherein the sulfurized-carbon particles consist essentially of carbon and sulfur.

12. The device of any preceding Claim, wherein the mass ratio of the carbon covalently bonded to the sulfur in the sulfurized-carbon particles to the carbon nanomaterial is greater than one; optionally wherein the mass ratio is greater than ten.

13. The device of any preceding Claim, wherein essentially all the sulfur in the agglomerates of sulfurized-carbon particles is bonded to carbon before cycling of the energy-storage device.

14. A method of making an electrode for an energy-storage device, the method comprising:
(a) providing sulfurized-carbon particles, wherein the sulfurized-carbon particles comprise a mixture of carbon and sulfur atoms;
(b) combining the sulfurized-carbon particles with carbon nanomaterial; and
(c) forming agglomerates of the sulfurized-carbon particles and carbon nanomaterial;
wherein, at least 50% of the carbon atoms with an adjacent sulfur atom in the agglomerates are each bonded to the adjacent sulfur atom via carbon-sulfur bonds.

15. The method of Claim 14, wherein step (c) further comprises heating the sulfurized-carbon particles with the carbon nanomaterial to produce the agglomerates.

16. The method of any of Claims 14 or 15 further comprising the step of combining the agglomerates of step (c) with a solvent to produce a slurry;
optionally further comprising spreading the slurry on a current collector and drying the slurry on the current collector;
further optionally, wherein producing the slurry comprises combining the agglomerates of step (c) with a binder and a conductive carbon additive.

17. The method of any of Claims 14 to 16 further comprising lithiating the agglomerates of step (c) before incorporating the electrode into the energy-storage device.

18. The method of any of Claims 14 to 17 wherein step (a) comprises forming the sulfurized-carbon particles, wherein the forming step includes combining sulfur with a polymer and pyrolyzing the polymer with the sulfur; optionally wherein less than 10 wt% of the sulfur atoms in the sulfurized-carbon particles formed in this step are elemental sulfur; further optionally wherein the step of combining sulfur with the polymer comprises milling the sulfur with the polymer.

19. The method of any of Claims 14 to 17, wherein steps (a) to (c) are conducted simultaneously, and further wherein the sulfurized-carbon particles and agglomerates are formed by pyrolyzing a mixture of a polymer, sulfur, and the carbon nanomaterial.
